(19) Europäisches Patentamt
European Patent Office
Office européen des brevets

(11) EP 4 448 280 B1

(12) EUROPEAN PATENT SPECIFICATION

(45) Date of publication and mention of the grant of the patent:
**29.10.2025 Bulletin 2025/44**

(21) Application number: **22854322.9**

(22) Date of filing: **14.12.2022**

(51) International Patent Classification (IPC):
***B32B 27/08*** *(2006.01)* ***B32B 27/28*** *(2006.01)*
***B32B 27/32*** *(2006.01)* ***C08J 5/18*** *(2006.01)*
***B32B 1/00*** *(2024.01)* ***C08L 23/04*** *(2006.01)*
***C08L 83/04*** *(2006.01)*

(52) Cooperative Patent Classification (CPC):
(C-Sets available)
**B32B 27/08; B32B 1/00; B32B 27/283; B32B 27/32; C08L 23/04; C08L 83/04; C09D 183/04;** B32B 2250/03; B32B 2250/05; B32B 2250/24; B32B 2250/40; B32B 2264/00; B32B 2270/00; B32B 2307/30; B32B 2307/31;
(Cont.)

(86) International application number:
**PCT/US2022/081542**

(87) International publication number:
**WO 2023/114834 (22.06.2023 Gazette 2023/25)**

# (54) MULTILAYER FILMS AND ARTICLES COMPRISING MULTILAYER FILMS

MEHRSCHICHT-FILME UND ARTIKEL, DIE MEHRSCHICHT-FILME UMFASSEN

FILMS MULTICOUCHES ET ARTICLES COMPRENANT DES FILMS MULTICOUCHES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.12.2021 US 202163265516 P**

(43) Date of publication of application:
**23.10.2024 Bulletin 2024/43**

(73) Proprietor: **Dow Global Technologies LLC**
**Midland, MI 48674 (US)**

(72) Inventors:
- **ALABOSON, Justice**
  **Freeport, Texas 77541 (US)**
- **KALIHARI, Vivek**
  **Missouri City, Texas 77459 (US)**
- **SHARMA, Rahul**
  **Lake Jackson, Texas 77566 (US)**
- **DEGROOT, Jacquelyn A.**
  **Freeport, Texas 77541 (US)**
- **MAZZOLA, Nicolas Cardoso**
  **Freeport, Texas 77541 (US)**
- **CHAUDHARY, Amit K.**
  **Lake Jackson, Texas 77566 (US)**

(74) Representative: **Boult Wade Tennant LLP**
**Salisbury Square House**
**8 Salisbury Square**
**London EC4Y 8AP (GB)**

(56) References cited:
**EP-A1- 3 412 453** **EP-A1- 3 412 455**
**WO-A1-2020/123507** **WO-A1-2021/021354**
**WO-A1-2021/076357** **WO-A1-2022/015469**
**WO-A1-97/33747** **US-A- 5 972 496**
**US-A1- 2019 299 580**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2307/50; B32B 2307/544; B32B 2307/546;
B32B 2307/70; B32B 2307/72; B32B 2307/732;
B32B 2439/06; B32B 2439/40; B32B 2439/46;
B32B 2439/70; C08G 77/04

C-Sets
**C08L 23/04, C08L 83/04**

## Description

### Field

This disclosure relates to multilayer films and to articles comprising multilayer films.

### Introduction

Bag-in-box flexible liquid packages ("BIB packages") in all formats (e.g., Intermediate Bulk Containers (IBC), flexi-tanks) are used to hold a variety of liquids. These bags can typically hold from 0.5 gallon up to 6,000 gallons of liquid, such as food (e.g. juices and other beverages, sauces, condiments). and industrial liquids. As interest in BIB packages grows, more attention will be paid to the performance of such packages under a variety of conditions, ranging from filling through handling, transportation and storage. Film structures for BIB packages typically range from monolayer to multilayer films consisting of polyethylene and other materials (e.g., polyamide, ethylene vinyl alcohol, metallized polyethylene terephthalate) depending on the product that is to be packaged and/or the performance that is required.

For large format bags (e.g., 250 gallons or greater), defects in the bag typically occur during transportation. For example, pinholes typically originate at high stress regions (e.g., near the water or liquid line) where the most intense film flexing is seen. Leakage through these pinholes typically results in material loss, cargo rejection, and/or costly clean ups. There are several approaches to reduce the risk caused by pinholes. These include the use of multiple plys for a single bag, and even the use of dunnage systems, which can add significant cost in terms of material and labor.

Many applications require a certain level of flex crack performance, typically measured using Gelbo flex crack resistance. For some of the most demanding applications, a Gelbo flex crack resistance of two or less pinholes in 20,000 cycles is desired. To achieve such performance, some film converters have been exploring the use of complex film structures consisting of multi-component materials. Multi-component structures have, in general, higher raw material costs than all polyolefin structures. In addition to costs, not all film converters are equipped to run a variety of materials as some materials require special extrusion equipment which may have special maintenance needs. In addition, there may be product losses due to a film structure being out of specification as manufacturing lines are purged when transitioning from one film structure to the other.

Furthermore, multilayer structures that incorporate a variety of materials, including, for example, polypropylene, polyamide, and polyethylene terephthalate, are widely used in food packaging. Such structures often require desirable properties such as flex crack performance-for example, to avoid breakage during transport. The combination of layers and materials can allow for good performance, but such multilayer structures can be difficult, if not impossible, to recycle together due to the different types of materials that are not recycle-compatible with each other.

WO 97/33747 A1 relates to a metallized film structure comprising a first outer skin layer (a) of an olefin co- or terpolymer having an external surface which is sealable and machinable, the first skin layer containing a non-migratory particulate cross-linked hydrocarbyl substituted polysiloxane, and which is located on one side of a core olefinic polymer layer (b), on an opposite side of the core layer there is a second outer skin layer (c) which is an ethylene homopolymer which is free of the particulate cross-linked hydrocarbyl-substituted polysiloxane of the first skin layer, the second skin layer having a metal deposited thereon.

WO2020/123507 A1 relates to a multilayer film.

WO2021/021354 A1 relates to multilayer films, bags, and other articles.

There remains a need for new film structures that are more sustainable, less costly, and can provide desirable properties such as flex crack performance.

### Summary

The present invention provides multilayer films that can be used, in some embodiments, for packaging of liquids. According to some embodiments, multilayer films of the present invention can provide desirable flex crack performance when incorporated into bags. In some embodiments, multilayer films also provide good surface heat resistance and/or reduced surface tackiness. In some embodiments, multilayer films can advantageously provide desirable flex crack performance while also being composed substantially of a single type of polyolefin (e.g., all polyethylene or all polypropylene). Such embodiments advantageously provide a high level of flex crack resistance while being highly recyclable, which represents a high performing solution that is also sustainable.

In one aspect, the present invention provides a multilayer film comprising at least three layers:

(a) a first skin layer comprising (1) at least one polyolefin having a density of 0.87 g/cm$^3$ to 0.97 g/cm$^3$, wherein the first skin layer comprises at least 90 weight percent polyolefin based on the total weight of the first skin layer; and (2) from 0.05 weight percent to 5.0 weight percent of at least one polydimethylsiloxane, based on the total weight of the first skin

layer, wherein at least one of the polydimethylsiloxane has a weight average molecular weight, Mw, of from 20,000 g/mol to 700,000 g/mol, wherein the first skin layer has an outer surface and an inner surface, and wherein the outer surface is an outermost surface of the multilayer film;

(b) a core layer comprising (1) at least one polyolefin having a density of 0.87 g/cm$^3$ to 0.97 g/cm$^3$, wherein the core layer comprises at least 90 weight percent polyolefin based on the total weight of the core layer; and (2) from 0.05 weight percent to 5.0 weight percent of at least one polydimethylsiloxane, based on the total weight of the core layer, wherein at least one of the polydimethylsiloxane has a weight average molecular weight, Mw, of from 20,000 g/mol to 700,000 g/mol, and wherein the composition of the core layer is different from the composition of the first skin layer; and

(c) a second skin layer opposite the first skin layer;

wherein weight average molecular weight (Mw) of the polydimethylsiloxane is measured by GPC using a triple detection capability.

As discussed below, the present invention also provides bags and other articles formed from any of the inventive multilayer films disclosed herein.

These and other embodiments are described in more detail in the Detailed Description.

## Detailed Description

Unless stated to the contrary, implicit from the context, or customary in the art, all parts and percents are based on weight, all temperatures are in °C, and all test methods are current as of the filing date of this disclosure.

Any reference to the Periodic Table of Elements is that as published by CRC Press, Inc., 1990-1991. Reference to a group of elements in this table is by the new notation for numbering groups.

The term "alkenyl" (or "alkenyl group") refers to an organic radical derived from an aliphatic hydrocarbon by removing one hydrogen atom from an alkene group. A nonlimiting example of an alkenyl group is a vinyl group. A "vinyl group" is a $-CH=CH_2$ group.

"Alkoxy" (or "alkoxy group") refers to the $-OZ^1$ radical, where representative $Z^1$ include alkyl, substituted alkyl, cycloalkyl, substituted cycloalkyl, heterocycloalkyl, substituted heterocycloalkyl, silyl groups and combinations thereof. Nonlimiting examples of suitable alkoxy radicals include methoxy, ethoxy, benzyloxy, and t-butoxy.

The term "alkyl" (or "alkyl group") refers to an organic radical derived from an aliphatic hydrocarbon by removing one hydrogen atom therefrom. An alkyl group may be a linear, branched, cyclic or a combination thereof. The term "substituted alkyl" refers to an alkyl, in which at least one hydrogen atom is substituted with a substituent that comprises at least one heteroatom. Heteroatoms include, but are not limited to, O, N, P and S. Substituents include, but are not limited to, halide, OR', $NR'_2$, $PR'_2$, $P(=O)R'_2$, $SiR'_3$; where each R' is independently a $C_1$-$C_{20}$ hydrocarbyl group.

The term "alkynyl" (or "alkynyl group") refers to an organic radical derived from an aliphatic hydrocarbon by removing one hydrogen atom from an alkyne group.

The term "aryl" (or "aryl group") refers to an organic radical derived from aromatic hydrocarbon by removing one hydrogen atom therefrom. An aryl group may be a monocyclic and/or fused ring system, each ring of which suitably contains from 5 to 7, preferably from 5 or 6 atoms. Structures wherein two or more aryl groups are combined through single bond(s) are also included. Specific examples include, but are not limited to, phenyl, tolyl, naphthyl, biphenyl, anthryl, indenyl, fluorenyl, benzofluorenyl, phenanthryl, triphenylenyl, pyrenyl, perylenyl, chrysenyl, naphtacenyl, fluoranthenyl. The term "substituted aryl" refers to an aryl, in which at least one hydrogen atom is substituted with a substituent comprising at least one heteroatom. Heteroatoms include, but are not limited to, O, N, P and S. Substituents include, but are not limited to, halide OR', $NR'_2$, $PR'_2$, $P(=O)R'_2$, $SiR'_3$; where each R' is independently a $C_1$-$C_{20}$ hydrocarbyl group.

A "cycloalkyl" is a saturated cyclic non-aromatic hydrocarbon radical having a single ring or multiple condensed rings. Nonlimiting examples of suitable cycloalkyl radicals include cyclopentyl, cyclohexyl, cyclooctyl, bicyclooctyl, etc. In particular embodiments, cycloalkyls have between 3 and 200 carbon atoms, between 3 and 50 carbon atoms or between 3 and 20 carbon atoms.

The term "composition," as used herein, refers to a mixture of materials which comprises the composition, as well as reaction products and decomposition products formed from the materials of the composition.

"Polymer" means a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer. A polymer may be a single polymer, a polymer blend or a polymer mixture, including mixtures of polymers that are formed *in situ* during polymerization.

The term "interpolymer," as used herein, refers to polymers prepared by the polymerization of at least two different types of monomers. The generic term interpolymer thus includes copolymers (employed to refer to polymers

prepared from two different types of monomers), and polymers prepared from more than two different types of monomers.

The terms "olefin-based polymer" or "polyolefin," as used herein, refer to a polymer that comprises, in polymerized form, a majority amount of olefin monomer, for example ethylene or propylene (based on the weight of the polymer), and optionally may comprise one or more comonomers.

The term, "ethylene/α-olefin interpolymer," as used herein, refers to an interpolymer that comprises, in polymerized form, a majority amount (>50 mol %) of units derived from ethylene monomer, and the remaining units derived from one or more α-olefins. Typical α-olefins used in forming ethylene/α-olefin interpolymers are $C_3$-$C_{10}$ alkenes.

The term, "ethylene/α-olefin copolymer," as used herein, refers to a copolymer that comprises, in polymerized form, a majority amount (>50 mol%) of ethylene monomer, and an α-olefin, as the only two monomer types.

The term "α-olefin", as used herein, refers to an alkene having a double bond at the primary or alpha (α) position.

"Polyethylene" or "ethylene-based polymer" shall mean polymers comprising a majority amount (>50 mol %) of units which have been derived from ethylene monomer. This includes polyethylene homopolymers, ethylene/α-olefin interpolymers, and ethylene/α-olefin copolymers. Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); Medium Density Polyethylene (MDPE); High Density Polyethylene (HDPE); Enhanced Polyethylene; polyethylene elastomers; and polyethylene plastomers. These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US 4,599,392). LDPE resins typically have a density in the range of 0.916 to 0.935 g/$cm^3$.

The term "LLDPE", includes both resin made using the traditional Ziegler-Natta catalyst systems and chromium-based catalyst systems as well as single-site catalysts, including, but not limited to, bis-metallocene catalysts (sometimes referred to as "m-LLDPE"), constrained geometry catalysts (CGC), and molecular catalysts. Resins include linear, substantially linear, or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/$cm^3$. "MDPE" is typically made using chromium or Ziegler-Natta catalysts or using single-site catalysts including, but not limited to, bis-metallocene catalysts, constrained geometry catalysts, and molecular catalysts, and typically have a molecular weight distribution ("MWD") greater than 2.5.

The term "HDPE" refers to polyethylenes having densities greater than about 0.935 g/$cm^3$ and up to about 0.970 g/$cm^3$, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/$cm^3$, which are generally prepared with Ziegler-Natta catalysts, chrome catalysts, or single-site catalysts including, but not limited to, bis-metallocene catalysts and constrained geometry catalysts.

"Polyethylene plastomers/elastomers" are substantially linear, or linear, ethylene/α-olefin copolymers containing homogeneous short-chain branching distribution comprising units derived from ethylene and units derived from at least one $C_3$-$C_{10}$ α-olefin comonomer, or at least one $C_4$-$C_8$ α-olefin comonomer, or at least one $C_6$-$C_8$ α-olefin comonomer. Polyethylene plastomers/elastomers have a density from 0.870 g/$cm^3$, or 0.880 g/ $cm^3$, or 0.890 g/ $cm^3$ to 0.900 g/ $cm^3$, or 0.902 g/ $cm^3$, or 0.904 g/ $cm^3$, or 0.909 g/ $cm^3$, or 0.910 g/ $cm^3$, or 0.912 g/ $cm^3$. Nonlimiting examples of polyethylene plastomers/ elastomers include AFFINITY™ plastomers and elastomers (available from The Dow Chemical Company), EXACT Plastomers (available from ExxonMobil Chemical), Tafmer (available from Mitsui), Nexlene™ (available from SK Chemicals Co.), and Lucene (available LG Chem Ltd.).

"Blend," "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend. Such blends can be prepared as dry blends, formed *in situ* (e.g., in a reactor), melt blends, or using other techniques known to those of skill in the art.

The term "in adhering contact" and like terms mean that one facial surface of one layer and one facial surface of another layer are in touching and binding contact to one another.

The terms "comprising," "including," "having," and their derivatives, are not intended to exclude the presence of any additional component, step, or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

In some embodiments, a multilayer film of the present invention comprises at least three layers with:

(a) a first skin layer comprising (1) at least one polyolefin having a density of 0.87 g/cm$^3$ to 0.97 g/cm$^3$, wherein the first skin layer comprises at least 90 weight percent polyolefin based on the total weight of the first skin layer; and (2) from 0.05 weight percent to 5.0 weight percent of at least one polydimethylsiloxane, based on the total weight of the first skin layer, wherein at least one of the polydimethylsiloxane has a weight average molecular weight, Mw, of from 20,000 g/mol to 700,000 g/mol, wherein the first skin layer has an outer surface and an inner surface, and wherein the outer surface is an outermost surface of the multilayer film;

(b) a core layer comprising (1) at least one polyolefin having a density of 0.87 g/cm$^3$ to 0.97 g/cm$^3$, wherein the core layer comprises at least 90 weight percent polyolefin based on the total weight of the core layer; and (2) from 0.05 weight percent to 5.0 weight percent of at least one polydimethylsiloxane, based on the total weight of the core layer, wherein at least one of the polydimethylsiloxane has a weight average molecular weight, Mw, of from 20,000 g/mol to 700,000 g/mol, and wherein the composition of the core layer is different from the composition of the first skin layer; and

(c) a second skin layer opposite the first skin layer.

In some embodiments, the polyolefin in the first skin layer is polyethylene that has a melt index ($I_2$) of 0.5 g/10 minutes to 30 g/10 minutes. In some embodiments, the polyolefin in the first skin layer is polypropylene that has a melt flow rate of 1.0 g/10 minutes to 16.0 g/10 minutes.

In some embodiments, the polyolefin in the core layer is polyethylene that has a melt index ($I_2$) of 0.5 g/10 minutes to 30 g/10 minutes. In some embodiments, the polyolefin in the core layer is polypropylene that has a melt flow rate of 1.0 g/10 minutes to 16.0 g/10 minutes.

In some embodiments, the multilayer film comprises at least 90 weight percent polyethylene based on the total weight of the multilayer film.

In some embodiments, at least one of the polydimethylsiloxane in the core layer is different from at least one of the polydimethylsiloxane in the first skin layer.

In some embodiments, the core layer has a first surface and a second surface, and the first surface of the core layer is in adhering contact with the inner surface of the first skin layer. In a further embodiment, the second skin layer has an inner surface and an outer surface, and the second surface of the core layer is in adhering contact with the inner surface of the second skin layer.

The core layer, in some embodiments, comprises at least one of polypropylene, LLDPE, MDPE, HDPE, or a combination thereof. In some embodiments, the thickness of the core layer is 5% to 90% of the thickness of the multilayer film. The first skin layer, in some embodiments, comprises polypropylene, LLDPE, MDPE, HDPE, or a combination thereof.

In some embodiments, the second skin layer is a sealant layer. The second skin layer, in some embodiments, further comprises from 0.05 weight percent to 5.0 weight percent of at least one polydimethylsiloxane, based on the total weight of the second skin layer, wherein at least one of the polydimethylsiloxane has a weight average molecular weight, Mw, of from 20,000 g/mol to 700,000 g/mol.

The multilayer film, in some embodiments, comprises three to seven layers. In some embodiments, the multilayer film has a total thickness of 1 mil (25.4 microns) to 10 mils (254 microns).

In some embodiments, the multilayer film further comprises a fourth layer, and the fourth layer further comprises from 0.05 weight percent to 5.0 weight percent of at least one polydimethylsiloxane, based on the total weight of the fourth layer, wherein at least one of the polydimethylsiloxane has a weight average molecular weight, Mw, of from 20,000 g/mol to 700,000 g/mol.

A multilayer film of the present invention can comprise a combination of two or more embodiments as described herein.

Some embodiments of the present invention relate to articles. An article according to embodiments of the present invention comprises a multilayer film according to any of the inventive embodiments disclosed herein. An article of the present invention can comprise a combination of two or more embodiments as described herein.

Some embodiments of the present invention relate to bags. A bag according to embodiments of the present invention comprises a multilayer film according to any of the inventive embodiments disclosed herein. A bag of the present

invention can comprise a combination of two or more embodiments as described herein.

## Polydimethylsiloxane

Multilayer films according to the present invention comprise a first skin layer, a second skin layer, and a core layer. The core layer is positioned between the skin layers. The first skin layer and the core layer each comprise 0.05 weight percent to 5.0 weight percent of at least one polydimethylsiloxane, based on the total weight of the respective layer, wherein at least one of the polydimethylsiloxane has a weight average molecular weight, Mw, of from 20,000 g/mol to 700,000 g/mol.

Polydimethylsiloxane ("PDMS") is a polymeric organosilicon compound with the following general Structure (I):

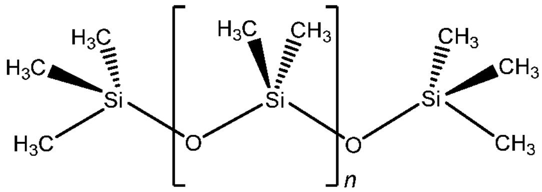

Structure (I)

wherein *n* is the number of repeating monomer [$SiO(CH_3)_2$] units and *n* is greater than or equal to 2, or from 2 to 5,500. The PDMS may be unsubstituted or substituted. A "substituted PDMS" is a PDMS in which at least one methyl group of Structure (I) is substituted with a substituent. Nonlimiting examples of substituents include halogen atoms (such as chlorine, fluorine, bromine, and iodine); halogen atom-containing groups (such as chloromethyl groups, perfluorobutyl groups, trifluoroethyl groups, and nonafluorohexyl groups); oxygen atom-containing groups (such as hydroxy groups, alkoxy groups (such as methoxy groups and ethoxy groups), (meth)acrylic epoxy groups, and carboxyl groups); nitrogen atom-containing groups (such as amino-functional groups, amido-functional groups, and cyano-functional groups); sulphur atom-containing groups (such as mercapto groups); hydrogen; $C_2$-$C_{10}$ alkyl groups (such as an ethyl group); $C_2$-$C_{10}$ alkynyl groups; alkenyl groups (such as vinyl groups and hexenyl groups); aryl groups (such as phenyl groups and substituted phenyl groups); cycloalkyl groups (such as cyclohexane groups); and combinations thereof. The substituted methyl group may be a terminal methyl group or a non-terminal methyl group. Nonlimiting examples of suitable substituted PDMS include trialkylsilyl terminated PDMS wherein at least one alkyl is a $C_2$-$C_{10}$ alkyl; dialkylhydroxysilyl terminated PDMS; dialkylhydrogensilyl terminated PDMS; dialkylalkenyl silyl terminated PDMS; and dialkylvinylsilyl terminated PDMS. In an embodiment, the substituted PDMS is a dimethylhydroxysilyl terminated PDMS. In another embodiment, the substituted PDMS is a dimethylvinylsilyl terminated PDMS.

In an embodiment, the substituted PDMS excludes nitrogen atom-containing groups. In another embodiment, the substituted PDMS excludes epoxy substituent groups.

In an embodiment, the PDMS is unsubstituted. An "unsubstituted PDMS" is the PDMS of Structure (I) wherein no methyl group in Structure (I) is substituted with a substituent. In an embodiment, the unsubstituted PDMS is a trimethylsilyl terminated PDMS.

In some embodiments, the PDMS has a viscosity of 1,000 cSt to 2,000,000 cSt.

In an embodiment, the PDMS has a number average molecular weight, Mn, from 30,000 g/mol to 2,000,000 g/mol.

In an embodiment, the PDMS (such as a dimethylhydroxysilyl terminated PDMS) has one, some, or all of the following properties:

(i) a viscosity of 1,000 cSt to 2,000,000 cSt, or 5,000 cSt to 1,500,000 cSt, or 10,000 cSt to 1,000,000 cSt, or 30,000 cSt to 500,000 cSt, or 45,000 cSt to 250,000 cSt, or 50,000 cSt to 200,000 cSt;

(ii) a number average molecular weight, Mn, of a lower limit from 15,000 g/mol, or 25,000 g/mol, or 35,000 g/mol, or 40,000 g/mol, or 45,000 g/mol, or 48,000 g/mol to 49,000 g/mol, or 50,000 g/mol, or 55,000 g/mol, or 60,000 g/mol, or 65,000 g/mol, or 70,000 g/mol, or 75,000 g/mol, or 80,000 g/mol, or 90,000 g/mol, or 100,000 g/mol, or 150,000 g/mol, or 200,000 g/mol, or 250,000 g/mol, or 290,000 g/mol, or 300,000 g/mol to an upper limit of 65,000 g/mol, or 70,000 g/mol, or 75,000 g/mol, or 80,000 g/mol, or 90,000 g/mol, or 100,000 g/mol, or 150,000 g/mol, or 200,000 g/mol, or 250,000 g/mol, or 290,000 g/mol, or 300,000 g/mol or 400,000 g/mol; and/or

(iii) a weight average molecular weight, Mw, of a lower limit from 20,000 g/mol, 30,000 g/mol, or 40,000 g/mol, or 45,000 g/mol, or 50,000 g/mol, or 55,000 g/mol, or 60,000 g/mol, or 65,000 g/mol, or 70,000 g/mol, or 75,000 g/mol, or 80,000 g/mol, or 90,000 g/mol, or 100,000 g/mol, or 120,000 g/mol to 130,000 g/mol, or 140,000 g/mol, or 150,000 g/mol, or 200,000 g/mol, or 250,000 g/mol, or 290,000 g/mol, or 300,000 g/mol to an upper limit of 130,000 g/mol, or 140,000 g/mol, or 150,000 g/mol, or 200,000 g/mol, or 250,000 g/mol, or 290,000 g/mol, or 300,000 g/mol, or 350,000

g/mol, or 400,000 g/mol, or 450,000 g/mol, or 500,000 g/mol, or 550,000 g/mol, or 600,000 g/mol, or 650,000 g/mol, or 700,000 g/mol; and/or

(iv) a molecular weight distribution (Mw/Mn) from a lower limit of 1.0, or 1.5, or 2.0, or 2.1, or 2.2, or 2.3, or 2.4 to 2.5, or 2.6, or 2.7, or 2.8, or 2.9, or 3.0, or 3.5 to an upper limit of 1.5, or 2.0, or 2.1, or 2.2, or 2.3, or 2.4 to 2.5, or 2.6, or 2.7, or 2.8, or 2.9, or 3.0, or 3.5; and/or

(v) the PDMS has the Structure (I) and n is from a lower limit of 200, or 250, or 300, or 350, or 400, or 450, or 500, or 550, or 600, or 650 to 700, or 750, or 800, or 850, or 900, or 950, or 1000, or 1100, or 1200, or 1300, or 1400, or 1500, or 1600, or 1700, or 1800, or 1900, or 2000, or 2500, or 3000, or 3500, or 4000, or 4054 to an upper limit of 250, or 300, or 350, or 400, or 450, or 500, or 550, or 600, or 650 to 700, or 750, or 800, or 850, or 900, or 950, or 1000, or 1100, or 1200, or 1300, or 1400, or 1500, or 1600, or 1700, or 1800, or 1900, or 2000, or 2500, or 3000, or 3500, or 4000, or 4054, or 5000, or 5500.

The PDMS may comprise two or more embodiments disclosed herein.

As discussed elsewhere, the first skin layer and core layer each comprise at least one PDMS and may incorporate different PDMS's. In some embodiments, the first skin layer and core layer use the same PDMS.

## First Skin Layer

The multilayer film comprises at least three layers including a first skin layer. In some embodiments, the first skin layer comprises (1) at least one polyolefin having a density of 0.87 g/cm$^3$ to 0.97 g/cm$^3$, wherein the first skin layer comprises at least 90 weight percent polyolefin based on the total weight of the first skin layer; and (2) from 0.05 weight percent to 5.0 weight percent of at least one polydimethylsiloxane, based on the total weight of the first skin layer, wherein at least one of the polydimethylsiloxane has a weight average molecular weight, Mw, of from 20,000 g/mol to 700,000 g/mol, wherein the first skin layer has an outer surface and an inner surface, and wherein the outer surface is an outermost surface of the multilayer film.

In some embodiments, the first skin layer is formed from one polyolefin. The first skin layer, in some embodiments, is formed from a blend of polyolefins providing the specified overall density. The overall density of the first skin layer formed from a blend of polyolefins is the weighted sum of the densities of the individual resins that make up the first skin layer.

In some embodiments, the at least one polyolefin of the first skin layer has a density of 0.87 g/cm$^3$ to 0.97 g/cm$^3$. All individual values and subranges of from 0.87 g/cm$^3$ to 0.97 g/cm$^3$ are disclosed and incorporated herein. For example, the at least one polyolefin of the first skin layer can have a density with a lower limit of 0.88 g/cm$^3$, 0.89 g/cm$^3$, 0.90 g/cm$^3$, or 0.91 g/cm$^3$ to a density with an upper limit of 0.97g/cm$^3$, 0.96 g/cm$^3$, 0.95g/cm$^3$, 0.94 g/cm$^3$, 0.93g/cm$^3$, or 0.92 g/cm$^3$.

In some embodiments, the first skin layer comprises at least 90 weight percent polyolefin based on the total weight of the first skin layer. All individual values and subranges of at least 90 weight percent are disclosed and included herein. For example, the first skin layer can comprise at least 90 weight percent, 91 weight percent, 92 weight percent, 93 weight percent, 94 weight percent, 95 weight percent, 96 weight percent, 97 weight percent, 98 weight percent, or 99 weight percent polyolefin based on total weight of the first skin layer.

In some embodiments, the first skin layer comprises at least 90 weight percent polyethylene based on the total weight of the first skin layer. All individual values and subranges of at least 90 weight percent are disclosed and included herein. For example, the first skin layer can comprise at least 90 weight percent, 91 weight percent, 92 weight percent, 93 weight percent, 94 weight percent, 95 weight percent, 96 weight percent, 97 weight percent, 98 weight percent, or 99 weight percent polyethylene based on total weight of the first skin layer.

In some embodiments, the first skin layer comprises from 0.05 weight percent to 5.0 weight percent of at least one polydimethylsiloxane, based on the total weight of the first skin layer. All individual values and subranges of from 0.05 weight percent to 5.0 weight percent of at least one polydimethylsiloxane are disclosed and included herein. For example, the first skin layer can comprise from 0.05 to 5.0 weight percent, from 0.1 to 5.0 weight percent, from 0.5 to 5.0 weight percent, from 1.0 to 5.0 weight percent, or from 1.25 to 5.0 weight percent polydimethylsiloxane, based on the total weight of the first skin layer.

In some embodiments, the first skin layer comprises one polydimethylsiloxane. In some embodiments, the first skin layer comprises a blend of polydimethylsiloxane (e.g., two, three, or more polydimethylsiloxane). In some embodiments, at least one of the polydimethylsiloxane has a weight average molecular weight, Mw, of from 20,000 g/mol to 700,000 g/mol. All individual values and subranges of 20,000 g/mol to 700,000 g/mol are disclosed and included herein. For example, at least one polydimethylsiloxane of the first skin layer can have a weight average molecular weight, Mw, of a lower limit from 20,000 g/mol, 30,000 g/mol, or 40,000 g/mol, or 45,000 g/mol, or 50,000 g/mol, or 55,000 g/mol, or 60,000 g/mol, or 65,000 g/mol, or 70,000 g/mol, or 75,000 g/mol, or 80,000 g/mol, or 90,000 g/mol, or 100,000 g/mol, or 120,000 g/mol to 130,000 g/mol, or 140,000 g/mol, or 150,000 g/mol, or 200,000 g/mol, or 250,000 g/mol, or 290,000 g/mol, or 300,000 g/mol to an upper limit of 130,000 g/mol, or 140,000 g/mol, or 150,000 g/mol, or 200,000 g/mol, or 250,000 g/mol,

or 290,000 g/mol, or 300,000 g/mol, or 350,000 g/mol, or 400,000 g/mol, or 450,000 g/mol, or 500,000 g/mol, or 550,000 g/mol, or 600,000 g/mol, or 650,000 g/mol, or 700,000 g/mol.

For example, in some embodiments, the first skin layer comprises a polydimethylsiloxane, wherein the polydimethylsiloxane has a weight average molecular weight, Mw, of from 20,000 g/mol to 200,000 g/mol. In some embodiments, the first skin layer comprises a polydimethylsiloxane wherein the polydimethylsiloxane has a weight average molecular weight, Mw, of from 500,000 g/mol to 700,000 g/mol. In some embodiments, the first skin layer comprises two polydimethylsiloxane (e.g., a blend of polydimethylsiloxane in a masterbatch formulation), wherein one of the polydimethylsiloxane has a weight average molecular weight, Mw, of from 20,000 g/mol to 200,000 g/mol and another of the polydimethylsiloxane has a weight average molecular weight, Mw, of from 500,000 g/mol to 700,000 g/mol.

In some embodiments, the polyolefin in the first skin layer is polyethylene that has a melt index ($I_2$) of 0.5 g/10 minutes to 30 g/10 minutes. All individual values of 0.5 g/10 minutes to 30 g/10 minutes are disclosed and included herein. For example, polyethylene in the first skin layer can have a melt index ($I_2$) of 0.5 g/10 minutes to 30 g/10 minutes, 0.5 g/10 minutes to 20 g/10 minutes, 0.5 g/10 minutes to 10 g/10 minutes, 0.5 g/10 minutes to 5 g/10 minutes, or from 0.5 g/10 minutes to 1 g/10 minutes.

In some embodiments, the first skin layer comprises LLDPE, MDPE, HDPE, or a combination thereof.

Polyethylenes that are particularly well-suited for use in the first skin layer of some embodiments of the present invention include, without limitation, low density polyethylene (LDPE), polyethylene plastomer/elastomer, linear low density polyethylene (LLDPE), medium density polyethylene (MDPE), high density polyethylene (HDPE), other ethylene-based polymers (e.g., enhanced polyethylene) having a density from 0.87 g/cm$^3$ to 0.97 g/cm$^3$, olefin block copolymers, and combinations thereof. Various commercially available polyethylenes are contemplated for use as polyolefins in some embodiments of the present invention. Examples of commercially available polyethylene plastomers/elastomers that can be used in embodiments of the present invention include those available from The Dow Chemical Company under the names AFFINITY™ and ENGAGE™, such as AFFINITY™ PL 1880G. Examples of commercially available LDPE that can be used in embodiments of the present invention include those available from The Dow Chemical Company under the names DOW LDPE™ and AGILITY™. Examples of commercially available HDPE and LLDPE that can be used in embodiments of the present invention include those available from The Dow Chemical Company under the name DOWLEX™. Examples of commercially available olefin block copolymers that can be used in embodiments of the present invention include those commercially available from The Dow Chemical Company under the name INFUSE™. Examples of other commercially available HDPEs and ethylene-based polymers having a density from 0.87 to 0.97 g/cm$^3$ that can be used in some embodiments include those available from The Dow Chemical Company under the names ELITE™, ELITE™ AT, and INNATE™. An example of another commercially available HDPE that can be used in some embodiments is DOW™ DMDC 1250 from The Dow Chemical Company.

In some embodiments, the polyolefin in the first skin layer is polypropylene that has a density of 0.865 g/cm$^3$ to 0.905 g/cm$^3$ and/or a melt flow rate of 1.0 g/10 minutes to 16.0 g/10 minutes. All individual values and subranges of a density of from 0.865 g/cm$^3$ to 0.905 g/cm$^3$ are disclosed and included herein. For example, polypropylene of the first skin layer can have a density of from 0.865 g/cm$^3$ to 0.900 g/cm$^3$, 0.870 g/cm$^3$ to 0.895 g/cm$^3$, 0.870 g/cm$^3$ to 0.900 g/cm$^3$, 0.875 g/cm$^3$ to 0.900 g/cm$^3$, or 0.875 g/cm$^3$ to 0.885 g/cm$^3$. All individual values and subranges of a melt flow rate of 1.0 g/10 minutes to 16.0 g/10 minutes are disclosed and included herein. For example, polypropylene of the first skin layer can have a melt flow rate of 1.0 g/10 minutes to 15.0 g/10 minutes, 2.0 g/10 minutes to 13.0 g/10 minutes, 1.0 g/10 minutes to 11.0 g/10 minutes, 3.0 g/10 minutes to 10.0 g/10 minutes, 1.0 g/10 minutes to 8.0 g/10 minutes, 2.0 g/10 minutes to 7.0 g/10 minutes, 2.0 g/10 minutes to 6.0 g/10 minutes, 2.0 g/10 minutes to 5.0 g/10 minutes, 3.0 g/10 minutes to 9.0 g/10 minutes, or 4.0 g/10 minutes to 9.0 g/10 minutes.

## Core Layer

The multilayer film comprises at least three layers including a core layer. In some embodiments, the core layer comprises (1) at least one polyolefin having a density of 0.87 g/cm$^3$ to 0.97 g/cm$^3$, wherein the core layer comprises at least 90 weight percent polyolefin based on the total weight of the core layer; and (2) from 0.05 weight percent to 5.0 weight percent of at least one polydimethylsiloxane, based on the total weight of the core layer, wherein at least one of the polydimethylsiloxane has a weight average molecular weight, Mw, of from 20,000 g/mol to 700,000 g/mol, and wherein the composition of the core layer is different from the composition of the first skin layer.

In some embodiments, the core layer is formed from one polyolefin. The core layer, in some embodiments, is formed from a blend of polyolefins providing the specified overall density. The overall density of the core layer formed from a blend of polyolefins is the weighted sum of the densities of the individual resins that make up the layer.

In some embodiment, the at least one polyolefin of the core layer has a density of 0.87 g/cm$^3$ to 0.97 g/cm$^3$. All individual values and subranges of from 0.87 g/cm$^3$ to 0.97 g/cm$^3$ are disclosed and incorporated herein. For example, the at least one polyethylene of the core layer can have a density with a lower limit of 0.88 g/cm$^3$, 0.89 g/cm$^3$, 0.90 g/cm$^3$, or 0.91 g/cm$^3$ to a density with an upper limit of 0.97g/cm$^3$, 0.96 g/cm$^3$, 0.95g/cm$^3$, 0.94 g/cm$^3$, 0.93g/cm$^3$, or 0.92 g/cm$^3$.

In some embodiments, the core layer comprises at least 90 weight percent polyolefin based on the total weight of the core layer. All individual values and subranges of at least 90 weight percent are disclosed and included herein. For example, the core layer can comprise at least 90 weight percent, 91 weight percent, 92 weight percent, 93 weight percent, 94 weight percent, 95 weight percent, 96 weight percent, 97 weight percent, 98 weight percent, or 99 weight percent polyolefin based on total weight of the core layer.

In some embodiments, the core layer comprises at least 90 weight percent polyethylene based on the total weight of the core layer. All individual values and subranges of at least 90 weight percent are disclosed and included herein. For example, the core layer can comprise at least 90 weight percent, 91 weight percent, 92 weight percent, 93 weight percent, 94 weight percent, 95 weight percent, 96 weight percent, 97 weight percent, 98 weight percent, or 99 weight percent polyethylene based on total weight of the core layer.

In some embodiments, the core layer comprises from 0.05 weight percent to 5.0 weight percent of at least one polydimethylsiloxane, based on the total weight of the core layer. All individual values and subranges of from 0.05 weight percent to 5.0 weight percent of at least one polydimethylsiloxane are disclosed and included herein. For example, the core layer can comprise from 0.05 to 5.0 weight percent, from 0.1 to 5.0 weight percent, from 0.5 to 5.0 weight percent, from 1.0 to 5.0 weight percent, or from 1.25 to 5.0 weight percent polydimethylsiloxane, based on the total weight of the core layer.

In some embodiments, the core layer comprises one polydimethylsiloxane. In some embodiments, the core layer comprises a blend of polydimethylsiloxane (e.g., two, three, or more polydimethylsiloxane). In some embodiments, at least one of the polydimethylsiloxane has a weight average molecular weight, Mw, of from 20,000 g/mol to 700,000 g/mol. All individual values and subranges of 20,000 g/mol to 700,000 g/mol are disclosed and included herein. For example, at least one polydimethylsiloxane of the core layer can have a weight average molecular weight, Mw, of a lower limit from 20,000 g/mol, 30,000 g/mol, or 40,000 g/mol, or 45,000 g/mol, or 50,000 g/mol, or 55,000 g/mol, or 60,000 g/mol, or 65,000 g/mol, or 70,000 g/mol, or 75,000 g/mol, or 80,000 g/mol, or 90,000 g/mol, or 100,000 g/mol, or 120,000 g/mol to 130,000 g/mol, or 140,000 g/mol, or 150,000 g/mol, or 200,000 g/mol, or 250,000 g/mol, or 290,000 g/mol, or 300,000 g/mol to an upper limit of 130,000 g/mol, or 140,000 g/mol, or 150,000 g/mol, or 200,000 g/mol, or 250,000 g/mol, or 290,000 g/mol, or 300,000 g/mol, or 350,000 g/mol, or 400,000 g/mol, or 450,000 g/mol, or 500,000 g/mol, or 550,000 g/mol, or 600,000 g/mol, or 650,000 g/mol, or 700,000 g/mol.

For example, in some embodiments, the core layer comprises a polydimethylsiloxane, wherein the polydimethylsiloxane has a weight average molecular weight, Mw, of from 20,000 g/mol to 200,000 g/mol. In some embodiments, the core layer comprises a polydimethylsiloxane wherein the polydimethylsiloxane has a weight average molecular weight, Mw, of from 500,000 g/mol to 700,000 g/mol. In some embodiments, the core layer comprises two polydimethylsiloxane (e.g., a blend of polydimethylsiloxane in a masterbatch formulation), wherein one of the polydimethylsiloxane has a weight average molecular weight, Mw, of from 20,000 g/mol to 200,000 g/mol and another of the polydimethylsiloxane has a weight average molecular weight, Mw, of from 500,000 g/mol to 700,000 g/mol.

In some embodiments, at least one of the polydimethylsiloxane in the core layer is different from at least one of the polydimethylsiloxane in the first skin layer.

In some embodiments, the polyolefin in the core layer is polyethylene that has a melt index ($I_2$) of 0.5 g/10 minutes to 30 g/10 minutes. All individual values of 0.5 g/10 minutes to 30 g/10 minutes are disclosed and included herein. For example, polyethylene in the core layer can have a melt index ($I_2$) of 0.5 g/10 minutes to 30 g/10 minutes, 0.5 g/10 minutes to 20 g/10 minutes, 0.5 g/10 minutes to 10 g/10 minutes, 0.5 g/10 minutes to 5 g/10 minutes, or from 0.5 g/10 minutes to 1 g/10 minutes.

Polyethylenes that are particularly well-suited for use in the core layer of some embodiments of the present invention include, without limitation, low density polyethylene (LDPE), polyethylene plastomer/elastomer, linear low density polyethylene (LLDPE), medium density polyethylene (MDPE), high density polyethylene (HDPE), other ethylene-based polymers (e.g., enhanced polyethylene) having a density from 0.87 g/cm$^3$ to 0.97 g/cm$^3$, olefin block copolymers, and combinations thereof. In some embodiments, the core layer comprises LLDPE, MDPE, HDPE, or a combination thereof. Various commercially available polyethylenes are contemplated for use in some embodiments of the present invention. Examples of commercially available polyethylene plastomers/elastomers that can be used in embodiments of the present invention include those available from The Dow Chemical Company under the names AFFINITY™ and ENGAGE™, such as AFFINITY™ PL 1880G. Examples of commercially available LDPE that can be used in embodiments of the present invention include those available from The Dow Chemical Company under the names DOW LDPE™ and AGILITY™. Examples of commercially available HDPE and LLDPE that can be used in embodiments of the present invention include DOWLEX™ commercially available from The Dow Chemical Company. Examples of commercially available olefin block copolymers that can be used in embodiments of the present invention include those commercially available from The Dow Chemical Company under the name INFUSE™. Examples of other commercially available HDPEs and ethylene-based polymers having a density from 0.87 to 0.97 g/cm$^3$ that can be used in some embodiments include those available from The Dow Chemical Company under the names ELITE™, ELITE™ AT, and INNATE™. Examples of other commercially available HDPE that can be used in some embodiments include those available from The Dow Chemical Company under the name DOW™ DMDC 1250.

In some embodiments, the polyolefin in the core layer is polypropylene that has a density of 0.865 g/cm$^3$ to 0.905 g/cm$^3$ and/or a melt flow rate of 1.0 g/10 minutes to 16.0 g/10 minutes. All individual values and subranges of a density of from 0.865 g/cm$^3$ to 0.905 g/cm$^3$ are disclosed and included herein. For example, polypropylene of the core layer can have a density of from 0.865 g/cm$^3$ to 0.900 g/cm$^3$, 0.870 g/cm$^3$ to 0.895 g/cm$^3$, 0.870 g/cm$^3$ to 0.900 g/cm$^3$, 0.875 g/cm$^3$ to 0.900 g/cm$^3$, or 0.875 g/cm$^3$ to 0.885 g/cm$^3$. All individual values and subranges of a melt flow rate of 1.0 g/10 minutes to 16.0 g/10 minutes are disclosed and included herein. For example, polypropylene of the core layer can have a melt flow rate of 1.0 g/10 minutes to 15.0 g/10 minutes, 2.0 g/10 minutes to 13.0 g/10 minutes, 1.0 g/10 minutes to 11.0 g/10 minutes, 3.0 g/10 minutes to 10.0 g/10 minutes, 1.0 g/10 minutes to 8.0 g/10 minutes, 2.0 g/10 minutes to 7.0 g/10 minutes, 2.0 g/10 minutes to 6.0 g/10 minutes, 2.0 g/10 minutes to 5.0 g/10 minutes, 3.0 g/10 minutes to 9.0 g/10 minutes, or 4.0 g/10 minutes to 9.0 g/10 minutes.

In some embodiments, the thickness of the core layer is 5% to 90% of the thickness of the multilayer film. All individual values and subranges of 5% to 90% are included and disclosed herein. For example, the thickness of the core layer can be 5% to 90%, 10% to 80%, 20% to 70%, 30% to 70%, or 35% to 65% of the thickness of the multilayer film.

In some embodiments, the core layer has a first surface and a second surface, wherein the first surface of the core layer is in adhering contact with the inner surface of the first skin layer.

## Second Skin Layer

The multilayer film comprises at least three layers including a second skin layer opposite the first skin layer. In some embodiments, the second skin layer has the same composition as the first skin layer. In other embodiments, the second skin layer has a different composition than the first skin layer. In some embodiments, the second skin layer has an inner surface and an outer surface and wherein the second surface of the core layer is in adhering contact with the inner surface of the second skin layer.

In some embodiments, the second skin layer comprises from 0.05 weight percent to 5.0 weight percent of at least one polydimethylsiloxane, based on the total weight of the second skin layer, wherein at least one of the polydimethylsiloxane has a weight average molecular weight, Mw, of from 20,000 g/mol to 700,000 g/mol. In some embodiments, the second skin layer comprises from 0.05 weight percent to 5.0 weight percent of at least one polydimethylsiloxane, based on the total weight of the second skin layer. All individual values and subranges of from 0.05 weight percent to 5.0 weight percent of at least one polydimethylsiloxane are disclosed and included herein. For example, the second skin layer can comprise from 0.05 to 5.0 weight percent, from 0.1 to 5.0 weight percent, from 0.5 to 5.0 weight percent, from 1.0 to 5.0 weight percent, or from 1.25 to 5.0 weight percent polydimethylsiloxane, based on the total weight of the second skin layer.

In some embodiments, the second skin layer comprises one polydimethylsiloxane. In some embodiments, the second skin layer comprises a blend of polydimethylsiloxane (e.g., two, three, or more polydimethylsiloxane). In some embodiments, at least one of the polydimethylsiloxane has a weight average molecular weight, Mw, of from 20,000 g/mol to 700,000 g/mol. All individual values and subranges of 20,000 g/mol to 700,000 g/mol are disclosed and included herein. For example, at least one polydimethylsiloxane of the second skin layer can have a weight average molecular weight, Mw, of a lower limit from 20,000 g/mol, 30,000 g/mol, or 40,000 g/mol, or 45,000 g/mol, or 50,000 g/mol, or 55,000 g/mol, or 60,000 g/mol, or 65,000 g/mol, or 70,000 g/mol, or 75,000 g/mol, or 80,000 g/mol, or 90,000 g/mol, or 100,000 g/mol, or 120,000 g/mol to 130,000 g/mol, or 140,000 g/mol, or 150,000 g/mol, or 200,000 g/mol, or 250,000 g/mol, or 290,000 g/mol, or 300,000 g/mol to an upper limit of 130,000 g/mol, or 140,000 g/mol, or 150,000 g/mol, or 200,000 g/mol, or 250,000 g/mol, or 290,000 g/mol, or 300,000 g/mol, or 350,000 g/mol, or 400,000 g/mol, or 450,000 g/mol, or 500,000 g/mol, or 550,000 g/mol, or 600,000 g/mol, or 650,000 g/mol, or 700,000 g/mol.

For example, in some embodiments, the second skin layer comprises a polydimethylsiloxane, wherein the polydimethylsiloxane has a weight average molecular weight, Mw, of from 20,000 g/mol to 200,000 g/mol. In some embodiments, the second skin layer comprises a polydimethylsiloxane wherein the polydimethylsiloxane has a weight average molecular weight, Mw, of from 500,000 g/mol to 700,000 g/mol. In some embodiments, the second skin layer comprises two polydimethylsiloxane (e.g., a blend of polydimethylsiloxane in a masterbatch formulation), wherein one of the polydimethylsiloxane has a weight average molecular weight, Mw, of from 20,000 g/mol to 200,000 g/mol and another of the polydimethylsiloxane has a weight average molecular weight, Mw, of from 500,000 g/mol to 700,000 g/mol.

In some embodiments, the second skin layer comprises at least one polyolefin having a density of 0.87 g/cm$^3$ to 0.97 g/cm$^3$, wherein the second skin layer comprises at least 90 weight percent polyolefin based on the total weight of the second skin layer.

In some embodiments, the second skin layer is formed from one polyolefin. The second skin layer, in some embodiments, is formed from a blend of polyolefins providing the specified overall density. The overall density of the second skin layer formed from a blend of polyolefins is the weighted sum of the densities of the individual resins that make up the second skin layer.

In some embodiment, the at least one polyolefin of the second skin layer has a density of 0.87 g/cm$^3$ to 0.97 g/cm$^3$. All individual values and subranges of from 0.87 g/cm$^3$ to 0.97 g/cm$^3$ are disclosed and incorporated herein. For

example, the at least one polyolefin of the second skin layer can have a density with a lower limit of 0.88 g/cm$^3$, 0.89 g/cm$^3$, 0.90 g/cm$^3$, or 0.91 g/cm$^3$ to a density with an upper limit of 0.97g/cm$^3$, 0.96 g/cm$^3$, 0.95g/cm$^3$, 0.94 g/cm$^3$, 0.93g/cm$^3$, or 0.92 g/cm$^3$.

In some embodiments, the second skin layer comprises at least 90 weight percent polyolefin based on the total weight of the second skin layer. All individual values and subranges of at least 90 weight percent are disclosed and included herein. For example, the second skin layer can comprise at least 90 weight percent, 91 weight percent, 92 weight percent, 93 weight percent, 94 weight percent, 95 weight percent, 96 weight percent, 97 weight percent, 98 weight percent or 99 weight percent polyolefin based on total weight of the second skin layer.

In some embodiments, the second skin layer comprises at least 90 weight percent polyethylene based on the total weight of the second skin layer. All individual values and subranges of at least 90 weight percent are disclosed and included herein. For example, the second skin layer can comprise at least 90 weight percent, 91 weight percent, 92 weight percent, 93 weight percent, 94 weight percent, 95 weight percent, 96 weight percent, 97 weight percent, 98 weight percent or 99 weight percent polyethylene based on total weight of the second skin layer.

In some embodiments, the polyolefin in the second skin layer is polyethylene that has a melt index ($I_2$) of 0.5 g/10 minutes to 30 g/10 minutes. All individual values of 0.5 g/10 minutes to 30 g/10 minutes are disclosed and included herein. For example, polyethylene in the second skin layer can have a melt index ($I_2$) of 0.5 g/10 minutes to 30 g/10 minutes, 0.5 g/10 minutes to 20 g/10 minutes, 0.5 g/10 minutes to 10 g/10 minutes, 0.5 g/10 minutes to 5 g/10 minutes, or from 0.5 g/10 minutes to 1 g/10 minutes.

In some embodiments, the second skin layer comprises LLDPE, MDPE, HDPE, or a combination thereof.

In some embodiments, the polyolefin in the second skin layer is polypropylene that has a density of 0.865 g/cm$^3$ to 0.905 g/cm$^3$ and/or a melt flow rate of 1.0 g/10 minutes to 16.0 g/10 minutes. All individual values and subranges of a density of from 0.865 g/cm$^3$ to 0.905 g/cm$^3$ are disclosed and included herein. For example, polypropylene of the second skin layer can have a density of from 0.865 g/cm$^3$ to 0.900 g/cm$^3$, 0.870 g/cm$^3$ to 0.895 g/cm$^3$, 0.870 g/cm$^3$ to 0.900 g/cm$^3$, 0.875 g/cm$^3$ to 0.900 g/cm$^3$, or 0.875 g/cm$^3$ to 0.885 g/cm$^3$. All individual values and subranges of a melt flow rate of 1.0 g/10 minutes to 16.0 g/10 minutes are disclosed and included herein. For example, polypropylene of the second skin layer can have a melt flow rate of 1.0 g/10 minutes to 15.0 g/10 minutes, 2.0 g/10 minutes to 13.0 g/10 minutes, 1.0 g/10 minutes to 11.0 g/10 minutes, 3.0 g/10 minutes to 10.0 g/10 minutes, 1.0 g/10 minutes to 8.0 g/10 minutes, 2.0 g/10 minutes to 7.0 g/10 minutes, 2.0 g/10 minutes to 6.0 g/10 minutes, 2.0 g/10 minutes to 5.0 g/10 minutes, 3.0 g/10 minutes to 9.0 g/10 minutes, or 4.0 g/10 minutes to 9.0 g/10 minutes.

In some embodiments, the second skin layer is a sealant layer. In some embodiments, the sealant layer can comprise any polyethylene resins known to those having ordinary skill in the art to be useful as a sealant layer. The sealant layer, in some embodiments, may comprise one or more ethylene-based polymers having a density from 0.870 to 0.925 g/cm$^3$ and a melt index (I2) from 0.1 to 2.0 g/10 min. In further embodiments, the ethylene-based polymer of the sealant film (or sealant layer) may have a density from 870 to 0.925 g/cm$^3$, or from 0.900 to 0.925 g/cm$^3$, or 0.910 to 0.925 g/cm$^3$. Additionally, the ethylene-based polymer of the sealant film (or sealant layer) may have a melt index (I2) from 0.1 to 2.0 g/10 min, or from 0.1 to 1.5 g/10 min. Various commercial polyethylenes are considered suitable for the sealant layer. Suitable commercial examples may include ELITE™ 5400G, ELITE™ 5401B, and various AFFINITY™ polyolefin plastomers (e.g., AFFINITY™ PL 1888, AFFINITY™ PF 1140,and AFFINITY™ PF 1146, AFFINITY™ VP 8770G1), each of which are available from The Dow Chemical Company (Midland, MI).

## Other Layers

The multilayer film comprises at least three layers. In some embodiments, the multilayer film comprises three to seven layers. In some embodiments, the multilayer film, in addition to the first skin layer, second skin layer, and the core layer, further comprises a fourth layer. The fourth layer can be positioned between the first skin layer and the core layer (or another inner layer) or between the second skin layer and the core layer (or another inner layer). In some embodiments, the fourth layer comprises from 0.05 weight percent to 5.0 weight percent of at least one polydimethylsiloxane, based on the total weight of the second skin layer, wherein at least one of the polydimethylsiloxane has a weight average molecular weight, Mw, of from 20,000 g/mol to 700,000 g/mol.

In some embodiments, the multilayer film has a total thickness of 1 mil (25.4 microns) to 10 mils (254 microns). All individual values and subranges of 1 mil (25.4 microns) to 10 mils (254 microns) are disclosed and incorporated herein. For example, the multilayer film can have a total thickness of 1 mil to 10 mil, 2 mil to 8 mil, 3 mil to 7 mil, or 4 mil to 6 mil.

Multilayer films of the present invention exhibit one or more desirable properties. For example, in some embodiments, multilayer films can exhibit desirable bending stiffness, desirable Gelbo flex crack performance, and/or others. Such properties are particularly advantageous in a film that is highly recyclable (e.g., greater than 90% by weight polyethylene).

In some embodiments, the multilayer film comprises greater than 90 wt.%, or greater than 95 wt.%, or greater than 99 wt.%, based on total weight of the film, polyethylene. In other embodiments, the multilayer film comprises greater

than 90 wt.%, or greater than 95 wt.%, or greater than 99 wt.%, based on total weight of the film, polypropylene.

In some embodiments, a multilayer film of the present invention exhibits a bending stiffness of 2.35 mN·mm or less when the film has a thickness of 2 mils (50.8 microns) when measured according to the method described in the Test Methods section herein. A multilayer film of the present invention, in some embodiments, exhibits a bending stiffness of 2.00 mN·mm or less when the film has a thickness of 2 mils (50.8 microns). In some embodiments, a multilayer film of the present invention exhibits a bending stiffness of 2.00 mN·mm or less when the film has a thickness of 2 mils (50.8 microns).

In some embodiments, a multilayer film of the present invention exhibits a Gelbo flex crack performance of 2 pinholes or less in 20,000 cycles. In some embodiments, a multilayer film of the present invention exhibits a Gelbo flex crack performance of 1.5 pinholes or less in 20,000 cycles.

Multilayer films can be coextruded as blown films or cast films using techniques known to those of skill in the art based on the teachings herein. In particular, based on the compositions of the different film layers disclosed herein, blown film manufacturing lines or cast film manufacturing lines can be configured to coextrude multilayer films of the present invention in a single extrusion step using techniques known to those of skill in the art based on the teachings herein. In some embodiments, the multilayer films are coextruded blown films.

## Optional Additives

In some embodiments, one or more layers of the multilayer film include one or more optional additives. Nonlimiting examples of suitable additives include antiblock agents, antioxidants, antistatic agents, stabilizing agents, nucleating agents, colorants, pigments, ultra violet (UV) absorbers or stabilizers, flame retardants, compatibilizers, plasticizers, fillers, processing aids, antifog additive, crosslinking agents (e.g., peroxides), and combinations thereof.

In some embodiments, the first skin layer and/or the second skin layer includes an antiblock agent. An "antiblock agent" is a compound that minimizes, or prevents, blocking (i.e., adhesion) between two adjacent layers of film by creating a microscopic roughening of the film layer surface, which reduces the available contact area between adjacent layers. The antiblock agent may be organic or inorganic. Nonlimiting examples of suitable antiblock agents include silica, talc, calcium carbonate, and combinations thereof. In an embodiment, the antiblock agent is silica ($SiO_2$). The silica may be organic silica or synthetic silica. In another embodiment, the antiblock agent is talc.

In some embodiments, the first skin layer, the core layer, and/or the second skin layer contain from 0 wt%, or 0.01 wt%, or 0.05 wt%, or 0.1 wt%, or 0.2 wt% to 0.3 wt%, or 0.4 wt%, or 0.5 wt%, or 1.0 wt%, or 2.0 wt%, or 3.0 wt%, or 4.0 wt%, or 5.0 wt% total additives, based on the total weight of the layer.

## Articles

Embodiments of the present invention also comprise articles, such as packages, formed from or incorporating multilayer films of the present invention. Such packages can be formed from any of the inventive multilayer films described herein.

Examples of such articles can include flexible packages, pouches, stand-up pouches, and pre-made packages or pouches. In some embodiments, multilayer films or laminates of the present invention can be used for food packages. Examples of food that can be included in such packages include meats, cheeses, cereal, nuts, juices, sauces, and others. Such packages can be formed using techniques known to those of skill in the art based on the teachings herein and based on the particular use for the package (e.g., type of food, amount of food).

One example of an article that can be formed from any of the inventive multilayer films described herein is a large bag. In some embodiments, such bags have a volume of at least 250 gallons. Such bags, in some embodiments, have a volume up to about 6,000 gallons. In some embodiments, such bags can be used in bag-in-box flexible liquid packages ("BIB packages"). Such bags can be used for a wide variety of liquids.

## TEST METHODS

Unless otherwise indicated herein, the following analytical methods are used in describing aspects of the present invention:

### Melt index and Melt Flow Rate

Melt indices $I_2$ (or I2) and $I_{10}$ (or I10) were measured in accordance to ASTM D-1238 (method B) at 190°C and at 2.16 kg and 10 kg load, respectively. Their values are reported in g/10 min. Melt flow rate (MFR) is used for polypropylene homopolymers and propylene-ethylene interpolymers and is measured in accordance with ASTM D-1238 at 230°C at 2.16 kg.

## Density

Samples for density measurement are prepared according to ASTM D4703. Measurements are made, according to ASTM D792, Method B, within one hour of sample pressing.

## GPC-Triple Detector (PDMS Mw and Mn measurement)

Weight average molecular weight (Mw) and number average molecular weight (Mn) of the polydimethylsiloxane are measured by GPC (Viscotek™ GPC Max) using a triple detection capability. The Viscotek™ TDA305 unit is equipped with a differential refractometer, an online differential pressure viscometer, and low angle light scattering (LALS: 7° and 90° angles of detection). The mobile phase is Toluene HPLC grade. The columns are two PL Gel Mixed C from Varian - (7.5 * 300 mm, 5 μm particle size) and a PL Gel Guard column from Varian - (7.5 * 300 mm) 5 fractom Injection volume with a flow of 1 mL/min and a run time of 37 min. The column and detector temperature is 40°C. The software used is Omnisec 4.6.1 (Viscotek™).

The detectors are calibrated by injection of a narrow polystyrene standard (Mw 68,100 g/mol) of a known concentration. Correct run parameters are checked by using a narrow molecular weight distribution polystyrene standard (PS71K). The molecular weight averages must be within the Statistical Process Control (SPC) chart in order to validate the detectors calibration. Typical $GPC^3$ precision and accuracy (which depends on the refractive index increment) are around 2-3%.

## Bending Stiffness

Bending stiffness of multilayer films is calculated based on the principles described by Barry A. Morris and John D. Vansant in "The Influence of Sealant Modulus on the Bending Stiffness of Multilayer Films", presented at the 1997 TAPPI Polymers, Laminations and Coatings Conference held in Toronto, Ontario, Canada on August 24-28, 1997 and published at pages 165-172 of the Conference Proceedings; the paper also later presented at the Society of Plastics Engineers ANTEC Conference, May 1998 and published at pages 35-40 of the Conference Proceedings; and the paper additionally published in the journal Packaging Technology and Engineering (Barry A. Morris and John D. Vansant, "Sealant Modulus in Multilayer Films Can Skew Bending Stiffness", Packaging Technology and Engineering, Vol. 7, No. 5, 46-51 (May, 1998)).

The bending stiffness or stiffness factor of a multilayer film, being deflected by D, under an applied force F can be described by:

$$\frac{F}{D} = \left(\sum_{i=1}^{n} E_i I_i\right) G'.$$

wherein $E_i$ = modulus of layer I, $I_i$ = contribution to the total moment of inertia from layer I, n = number of layers and G' = describes how the force is applied. $\Sigma E_i I_i$ represents a bending stiffness describing the composite stiffness of the beam, film, sheet, etc. $\Sigma E_i I_i$, the bending stiffness, is calculated by first locating the neutral axis and then the contribution of each layer based on the distance of the layer to the neutral axis.

## Gelbo Flex Crack Performance

The Gelbo flex crack performance is measured using a Gelbo flex tester set up to test in accordance with ASTM F392.

Some embodiments of the invention will now be described in detail in the following Examples.

## EXAMPLES

The raw materials shown in Table 1 are used to prepare the Inventive Films and Comparative Films discussed below. Each of the resins are commercially available from The Dow Chemical Company unless noted otherwise.

**Table 1**

| Commercial Name | Type | $I_2$ (g/10min) | Density (g/cc) |
|---|---|---|---|
| AFFINITY™ PL 1880G | Polyethylene Plastomer | 1.0 | 0.902 |
| ENGAGE™ 8180 | Polyolefin Elastomer | 0.5 | 0.863 |

(continued)

| Commercial Name | Type | $I_2$ (g/10min) | Density (g/cc) |
|---|---|---|---|
| INNATE™ ST50 | Ethylene-based Polymer | 0.85 | 0.918 |
| PDMS* | PDMS Gum Mn = 336,000 g/mol<br>PDMS Gum Mw = 628,000 g/mol<br>PDMS Fluid 60,000 cSt<br>PDMS Fluid Mn = 61,000 g/mol<br>PDMS Fluid Mw = 121,000 g/mol | N/A | N/A |
| * To produce the PDMS formulation, a linear low density polyethylene (DOWLEX™ 2047G) is blended with polydimethylsiloxane (PDMS) in a co-rotating twin screw extruder (TSE). A 26mm Coperion co-rotating twin screw extruder with L/D of 60 is used to melt mix and disperse the PDMS into the linear low density polyethylene matrix. Specifically, polyethylene pellets are fed into a feed hopper of the TSE hopper using a K-Tron gravimetric feeder. Gum PDMS (4-7034 PDMS gum) is injected into the TSE at an L/D of 18 using a combination of Bonnet feeder and Maag gear pump. Fluid PDMS (PMX-200, 60,000 cSt) is injected into the TSE at an L/D of 34 using a Zenith gear pump. The TSE barrels are set at 180°C and the screw speed is 300 rpm. The polyethylene pellets are fed at a rate of 26 lb/h, the PDMS gum is fed at a rate of 10.5 lb/h and the PDMS fluid is injected at a rate of 3.5 lb/h. The total throughput rate is 40 lb/h. The final PDMS polymer melt is pelletized using a Gala underwater pelletizer to result in a pellet size corresponding to 32 pellets/gm. | | | |

Inventive Films 1-2 and Comparative Films A-D

Inventive Films 1-2 and Comparative Films A-D are three layer (A/B/A) coextruded films that are prepared as follows. Inventive Films 1-2 and Comparative Films A-D have the following structures:

**Table 2**

| Film | Structure* | Layer Ratio (A/B/A) |
|---|---|---|
| Inventive Film 1 | A: 98.5% INNATE™ ST50 + 1.5% PDMS<br>B: 98.5% INNATE™ ST50 + 1.5% PDMS | 20% // 60% // 20% |
| Inventive Film 2 | A: 98.5% INNATE™ ST50 + 1.5% PDMS<br>B: 98.5% AFFINITY™ PL 1880G + 1.5% PDMS | 30% // 40% // 30% |
| Comparative Film A | A: 100% INNATE™ ST50<br>B: 100% INNATE™ ST50 | 20% // 60% // 20% |
| Comparative Film B | A: 100% INNATE™ ST50<br>B: 98.5% INNATE™ ST50 + 1.5% PDMS | 20% // 60% // 20% |
| Comparative Film C | A: 100% INNATE™ ST50<br>B: 100% ENGAGE™ 8180 | 40% // 20% // 40% |
| Comparative Film D | A: 98.5% INNATE™ ST50 + 1.5% PDMS<br>B: 100% INNATE™ ST50 | 30% // 40% // 30% |
| *Each multilayer film includes 3000 pm of talc in all layers. | | |

The films are produced using a LabTech coextrusion blown film line. The line is comprised of five 30:1 L/D single screw extruders, equipped with smooth feed zones. Screw diameters are 25 mm for the two outer layer extruders and 20 mm for the three core layer extruders. The die is 74.9 mm, and the die gap is 2 mm. The melt temperature is 430° F. The blow-up ratio is 2.5:1. The output rate is 20 pounds/hour/inch. The nominal thickness of each film is 2 mils.

The skin layer density of the films is calculated. The bending stiffness and the Gelbo flex crack performance are measured using the test methods described above (Gelbo flex crack performance is reported as "Defects"). The results are shown in Table 3.

Table 3

| Film | Skin Layer Density (g/cm³) | Defects | Bending Stiffness (mN.mm) |
|---|---|---|---|
| Inventive Film 1 | 0.918 | 1.33 | 1.89 |
| Inventive Film 2 | 0.918 | 1.00 | 1.82 |
| Comparative Film A | 0.918 | 10.67 | 1.89 |
| Comparative Film B | 0.918 | 8.33 | 1.89 |
| Comparative Film C | 0.918 | 12.00 | 1.86 |
| Comparative Film D | 0.918 | 9.33 | 1.89 |

Inventive Films 1 and 2 have excellent Gelbo flex crack performance ($\leq 2$) in comparison to Comparative Films A-D. Inventive Films 1 and 2 also have desirable bending stiffness. When comparing Comparative Films A-D to the Inventive Films, Inventive Films 1 and 2 demonstrate that the inclusion of PDMS in the layers of the film surprisingly improve Gelbo flex crack performance.

## Claims

**1.** A multilayer film comprising at least three layers:

(a) a first skin layer comprising (1) at least one polyolefin having a density of 0.87 g/cm$^3$ to 0.97 g/cm$^3$, wherein the first skin layer comprises at least 90 weight percent polyolefin based on the total weight of the first skin layer; and (2) from 0.05 weight percent to 5.0 weight percent of at least one polydimethylsiloxane, based on the total weight of the first skin layer, wherein at least one of the polydimethylsiloxane has a weight average molecular weight, Mw, of from 20,000 g/mol to 700,000 g/mol, wherein the first skin layer has an outer surface and an inner surface, and wherein the outer surface is an outermost surface of the multilayer film;
(b) a core layer comprising (1) at least one polyolefin having a density of 0.87 g/cm$^3$ to 0.97 g/cm$^3$, wherein the core layer comprises at least 90 weight percent polyolefin based on the total weight of the core layer; and (2) from 0.05 weight percent to 5.0 weight percent of at least one polydimethylsiloxane, based on the total weight of the core layer, wherein at least one of the polydimethylsiloxane has a weight average molecular weight, Mw, of from 20,000 g/mol to 700,000 g/mol, and wherein the composition of the core layer is different from the composition of the first skin layer; and
(c) a second skin layer opposite the first skin layer;

wherein weight average molecular weight (Mw) of the polydimethylsiloxane is measured as defined in the description.

**2.** The multilayer film of claim 1, wherein the polyolefin in the first skin layer is polyethylene that has a melt index ($I_2$) of 0.5 g/10 minutes to 30.0 g/10 minutes; wherein melt index ($I_2$) is measured in accordance to ASTM D-1238 (method B) at 190°C and at 2.16 kg.

**3.** The multilayer film of claim 1, wherein the polyolefin in the first skin layer is polypropylene that has a melt flow rate of 1.0 g/10 minutes to 16.0 g/10 minutes; wherein Melt flow rate (MFR) is used for polypropylene homopolymers and propylene-ethylene interpolymers and is measured in accordance with ASTM D-1238 at 230°C at 2.16 kg.

**4.** The multilayer film of any of the preceding claims, wherein the multilayer film comprises at least 90 weight percent polyethylene based on the total weight of the multilayer film.

**5.** The multilayer film of any of the preceding claims, wherein at least one of the polydimethylsiloxane in the core layer is different from at least one of the polydimethylsiloxane in the first skin layer.

**6.** The multilayer film of any of the preceding claims, wherein the core layer has a first surface and a second surface, wherein the first surface of the core layer is in adhering contact with the inner surface of the first skin layer.

**7.** The multilayer film of claim 6, wherein the second skin layer has an inner surface and an outer surface and wherein the second surface of the core layer is in adhering contact with the inner surface of the second skin layer.

**8.** The multilayer film of any of the preceding claims, wherein the core layer comprises at least one of LLDPE, MDPE, HDPE, or a combination thereof.

**9.** The multilayer film of any of the preceding claims, wherein the thickness of the core layer is 5% to 90% of the thickness of the multilayer film.

**10.** The multilayer film of any of the preceding claims, wherein the first skin layer comprises LLDPE, MDPE, HDPE, or a combination thereof.

**11.** The multilayer film of any of the preceding claims, wherein the second skin layer is a sealant layer.

**12.** The multilayer film of any of the preceding claims, wherein the second skin layer comprises from 0.05 weight percent to 5.0 weight percent of at least one polydimethylsiloxane, based on the total weight of the second skin layer, wherein at least one of the polydimethylsiloxane has a weight average molecular weight, Mw, of from 20,000 g/mol to 700,000 g/mol; wherein weight average molecular weight (Mw) of the polydimethylsiloxane is measured as defined in the description.

**13.** The multilayer film of any of the preceding claims, wherein the multilayer film comprises three to seven layers.

**14.** The multilayer film of any of the preceding claims further comprising a fourth layer wherein the fourth layer further comprises from 0.05 weight percent to 5.0 weight percent of at least one polydimethylsiloxane, based on the total weight of the fourth layer, wherein at least one of the polydimethylsiloxane has a weight average molecular weight, Mw, of from 20,000 g/mol to 700,000 g/mol; wherein weight average molecular weight (Mw) of the polydimethylsiloxane is measured as defined in the description.

**15.** The multilayer film of any of the preceding claims, wherein the multilayer film has a total thickness of 25.4 to 254 microns.

## Patentansprüche

**1.** Mehrschichtfolie, umfassend mindestens drei Schichten:

(a) eine erste Hautschicht, umfassend (1) mindestens ein Polyolefin mit einer Dichte von 0,87 $g/cm^3$ bis 0,97 $g/cm^3$, wobei die erste Hautschicht zu mindestens 90 Gewichtsprozent Polyolefin, bezogen auf das Gesamtgewicht der ersten Hautschicht; und (2) zu 0,05 Gewichtsprozent bis 5,0 Gewichtsprozent mindestens ein Polydimethylsiloxan, bezogen auf das Gesamtgewicht der ersten Hautschicht, umfasst, wobei mindestens eines des Polydimethylsiloxans ein gewichtsmittleres Molekulargewicht, Mw, von 20.000 g/mol bis 700.000 g/mol aufweist, wobei die erste Hautschicht eine äußere Oberfläche und eine innere Oberfläche aufweist und wobei die äußere Oberfläche die äußerste Oberfläche der Mehrschichtfolie ist;
(b) eine Kernschicht, umfassend (1) mindestens ein Polyolefin mit einer Dichte von 0,87 $g/cm^3$ bis 0,97 $g/cm^3$, wobei die Kernschicht zu mindestens 90 Gewichtsprozent Polyolefin, bezogen auf das Gesamtgewicht der Kernschicht; und (2) zu 0,05 Gewichtsprozent bis 5,0 Gewichtsprozent mindestens ein Polydimethylsiloxan, bezogen auf das Gesamtgewicht der Kernschicht, umfasst, wobei mindestens eines des Polydimethylsiloxans ein gewichtsmittleres Molekulargewicht, Mw, von 20.000 g/mol bis 700.000 g/mol aufweist und wobei die Zusammensetzung der Kernschicht sich von der Zusammensetzung der ersten Hautschicht unterscheidet; und
(c) eine zweite Hautschicht gegenüber der ersten Hautschicht;

wobei das gewichtsmittlere Molekulargewicht (Mw) des Polydimethylsiloxans gemessen wird wie in der Beschreibung definiert.

**2.** Mehrschichtfolie nach Anspruch 1, wobei das Polyolefin in der ersten Hautschicht Polyethylen ist, das einen Schmelzindex ($I_2$) von 0,5 g/10 Minuten bis 30,0 g/10 Minuten aufweist; wobei der Schmelzindex ($I_2$) gemäß ASTM D-1238 (Verfahren B) bei 190 °C und bei 2,16 kg gemessen wird.

**3.** Mehrschichtfolie nach Anspruch 1, wobei das Polyolefin in der ersten Hautschicht Polypropylen ist, das einen Schmelzflussindex von 1,0 g/10 Minuten bis 16,0 g/10 Minuten aufweist; wobei der Schmelzflussindex (MFR) für Polypropylen-Homopolymere und Propylen-Ethylen-Interpolymere verwendet wird und gemäß ASTM D-1238 bei

230 °C bei 2,16 kg gemessen wird.

4. Mehrschichtfolie nach einem der vorstehenden Ansprüche, wobei die Mehrschichtfolie zu mindestens 90 Gewichtsprozent Polyethylen, bezogen auf das Gesamtgewicht der Mehrschichtfolie, umfasst.

5. Mehrschichtfolie nach einem der vorstehenden Ansprüche, wobei sich mindestens eines des Polydimethylsiloxans in der Kernschicht von mindestens einem des Polydimethylsiloxans in der ersten Hautschicht unterscheidet.

6. Mehrschichtfolie nach einem der vorstehenden Ansprüche, wobei die Kernschicht eine erste Oberfläche und eine zweite Oberfläche aufweist, wobei die erste Oberfläche der Kernschicht in haftendem Kontakt mit der inneren Oberfläche der ersten Hautschicht steht.

7. Mehrschichtfolie nach Anspruch 6, wobei die zweite Hautschicht eine innere Oberfläche und eine äußere Oberfläche aufweist und wobei die zweite Oberfläche der Kernschicht in haftendem Kontakt mit der inneren Oberfläche der zweiten Hautschicht steht.

8. Mehrschichtfolie nach einem der vorstehenden Ansprüche, wobei die Kernschicht mindestens eines umfasst aus LLDPE, MDPE, HDPE oder einer Kombination davon.

9. Mehrschichtfolie nach einem der vorstehenden Ansprüche, wobei die Dicke der Kernschicht 5 % bis 90 % der Dicke der Mehrschichtfolie beträgt.

10. Mehrschichtfolie nach einem der vorstehenden Ansprüche, wobei die erste Hautschicht LLDPE, MDPE, HDPE oder eine Kombination davon umfasst.

11. Mehrschichtfolie nach einem der vorstehenden Ansprüche, wobei die zweite Hautschicht eine Dichtungsschicht ist.

12. Mehrschichtfolie nach einem der vorstehenden Ansprüche, wobei die zweite Hautschicht zu von 0,05 Gewichtsprozent bis 5,0 Gewichtsprozent mindestens ein Polydimethylsiloxan umfasst, bezogen auf das Gesamtgewicht der zweiten Hautschicht, wobei mindestens eines des Polydimethylsiloxans ein gewichtsmittleres Molekulargewicht, Mw, von 20.000 g/mol bis 700.000 g/mol aufweist; wobei das gewichtsmittlere Molekulargewicht (Mw) des Polydimethylsiloxans gemessen wird wie in der Beschreibung definiert.

13. Mehrschichtfolie nach einem der vorstehenden Ansprüche, wobei die Mehrschichtfolie drei bis sieben Schichten umfasst.

14. Mehrschichtfolie nach einem der vorstehenden Ansprüche, ferner umfassend eine vierte Schicht, wobei die vierte Schicht ferner zu 0,05 Gewichtsprozent bis 5,0 Gewichtsprozent mindestens ein Polydimethylsiloxan umfasst, bezogen auf das Gesamtgewicht der vierten Schicht, wobei mindestens eines des Polydimethylsiloxans ein gewichtsmittleres Molekulargewicht, Mw, von 20.000 g/mol bis 700.000 g/mol aufweist; wobei das gewichtsmittlere Molekulargewicht (Mw) des Polydimethylsiloxans gemessen wird wie in der Beschreibung definiert.

15. Mehrschichtfolie nach einem der vorstehenden Ansprüche, wobei die Mehrschichtfolie eine Gesamtdicke von 25,4 bis 254 Mikron aufweist.

**Revendications**

1. Film multicouche comprenant au moins trois couches :

(a) une première couche superficielle comprenant (1) au moins une polyoléfine ayant une masse volumique de 0,87 g/cm$^3$ à 0,97 g/cm$^3$, dans lequel la première couche superficielle comprend au moins 90 pour cent en poids de polyoléfine sur la base du poids total de la première couche superficielle ; et (2) de 0,05 pour cent en poids à 5,0 pour cent en poids d'au moins un polydiméthylsiloxane, sur la base du poids total de la première couche superficielle, dans lequel au moins un des polydiméthylsiloxanes a une masse moléculaire moyenne en poids, Mw, allant de 20 000 g/mol à 700 000 g/mol, dans lequel la première couche superficielle a une surface externe et une surface interne, et dans lequel la surface externe est la surface la plus externe du film multicouche ;
(b) une couche centrale comprenant (1) au moins une polyoléfine ayant une masse volumique de 0,87 g/cm$^3$ à

0,97 g/$cm^3$, dans lequel la couche centrale comprend au moins 90 pour cent en poids de polyoléfine sur la base du poids total de la couche centrale ; et (2) de 0,05 pour cent en poids à 5,0 pour cent en poids d'au moins un polydiméthylsiloxane, sur la base du poids total de la couche centrale, dans lequel au moins un des polydiméthylsiloxanes a une masse moléculaire moyenne en poids, Mw, allant 20 000 g/mol à 700 000 g/mol, et dans lequel la composition de la couche centrale est différente de la composition de la première couche superficielle ; et (c) une seconde couche superficielle opposée à la première couche superficielle ;

dans lequel la masse moléculaire moyenne en poids (Mw) du polydiméthylsiloxane est mesurée comme défini dans la description.

**2.** Film multicouche selon la revendication 1, dans lequel la polyoléfine de la première couche superficielle est du polyéthylène qui a un indice de fluidité ($I_2$) de 0,5 g/10 minutes à 30,0 g/10 minutes ; dans lequel l'indice de fluidité ($I_2$) est mesuré conformément à la norme ASTM D-1238 (méthode B) à 190 °C et à 2,16 kg.

**3.** Film multicouche selon la revendication 1, dans lequel la polyoléfine de la première couche superficielle est du polypropylène qui a un indice de fluidité à l'état fondu de 1,0 g/10 minutes à 16,0 g/10 minutes ; dans lequel l'indice de fluidité à l'état fondu (MFR) est utilisé pour les homopolymères de polypropylène et les interpolymères de propylène-éthylène et est mesuré conformément à la norme ASTM D-1238 à 230 °C et à 2,16 kg.

**4.** Film multicouche selon l'une quelconque des revendications précédentes, dans lequel le film multicouche comprend au moins 90 pour cent en poids de polyéthylène sur la base du poids total du film multicouche.

**5.** Film multicouche selon l'une quelconque des revendications précédentes, dans lequel au moins un des polydiméthylsiloxanes dans la couche centrale est différent d'au moins un des polydiméthylsiloxanes dans la première couche superficielle.

**6.** Film multicouche selon l'une quelconque des revendications précédentes, dans lequel la couche centrale a une première surface et une seconde surface, dans lequel la première surface de la couche centrale est en contact adhérent avec la surface interne de la première couche superficielle.

**7.** Film multicouche selon la revendication 6, dans lequel la seconde couche superficielle a une surface interne et une surface externe et dans lequel la seconde surface de la couche centrale est en contact adhérent avec la surface interne de la seconde couche superficielle.

**8.** Film multicouche selon l'une quelconque des revendications précédentes, dans lequel la couche centrale comprend au moins l'un parmi PEBDL, PEMD, PEHD, ou une combinaison de ceux-ci.

**9.** Film multicouche selon l'une quelconque des revendications précédentes, dans lequel l'épaisseur de la couche centrale représente 5 % à 90 % de l'épaisseur du film multicouche.

**10.** Film multicouche selon l'une quelconque des revendications précédentes, dans lequel la première couche superficielle comprend du PEBDL, du PEMD, du PEHD, ou une combinaison de ceux-ci.

**11.** Film multicouche selon l'une quelconque des revendications précédentes, dans lequel la seconde couche superficielle est une couche d'étanchéité.

**12.** Film multicouche selon l'une quelconque des revendications précédentes, dans lequel la seconde couche superficielle comprend de 0,05 pour cent en poids à 5,0 pour cent en poids d'au moins un polydiméthylsiloxane, sur la base du poids total de la seconde couche superficielle, dans lequel au moins un des polydiméthylsiloxanes a une masse moléculaire moyenne en poids, Mw, allant de 20 000 g/mol à 700 000 g/mol ; dans lequel la masse moléculaire moyenne en poids (Mw) du polydiméthylsiloxane est mesurée comme défini dans la description.

**13.** Film multicouche selon l'une quelconque des revendications précédentes, dans lequel le film multicouche comprend trois à sept couches.

**14.** Film multicouche selon l'une quelconque des revendications précédentes, comprenant en outre une quatrième couche, dans lequel la quatrième couche comprend de 0,05 pour cent en poids à 5,0 pour cent en poids d'au moins un polydiméthylsiloxane, sur la base du poids total de la quatrième couche, dans lequel au moins un des polydiméthylsiloxanes a une masse moléculaire moyenne en poids, Mw, allant de 20 000 g/mol à 700 000 g/mol ; dans lequel la masse moléculaire moyenne en poids (Mw) du polydiméthylsiloxane est mesurée comme défini dans la description.

**15.** Film multicouche selon l'une quelconque des revendications précédentes, dans lequel le film multicouche a une épaisseur totale de 25,4 à 254 micromètres.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9733747 A1
- WO 2020123507 A1
- WO 2021021354 A1
- US 4599392 A
- US 5272236 A
- US 5278272 A
- US 5582923 A
- US 5733155 A
- US 3645992 A
- US 4076698 A
- US 3914342 A
- US 5854045 A

### Non-patent literature cited in the description

- **BARRY A. MORRIS** ; **JOHN D. VANSANT**. The Influence of Sealant Modulus on the Bending Stiffness of Multilayer Films. *1997 TAPPI Polymers, Laminations and Coatings Conference held in Toronto, Ontario, Canada*, 24 August 1997, 165-172
- *Society of Plastics Engineers ANTEC Conference*, May 1998, 35-40
- **BARRY A. MORRIS** ; **JOHN D. VANSANT**. Sealant Modulus in Multilayer Films Can Skew Bending Stiffness. *Packaging Technology and Engineering*, May 1998, vol. 7 (5), 46-51